# EUROPEAN PATENT SPECIFICATION

(11) **EP 2 623 666 B1**
(45) Date of publication and mention of the grant of the patent: **12.04.2017**
(21) Application number: 13153129.5
(22) Date of filing: 29.01.2013
(51) Int. Cl.: D07B 1/16, D07B 1/14, D07B 7/14

(54) **Cable with an extrusion coated sheathing, corresponding method and device for manufacturing the same**
Kabel mit einem aufextrudiertem Mantel, entsprechendes Verfahren und Vorrichtung zur Herstellung des Kabels
Câble avec une couche extérieure extrudée, dispositf et procédé de fabrication correspondant

(30) Priority: 31.01.2012 GB 201201630
(43) Date of publication of application: 07.08.2013
(73) Proprietor: Bridon Limited, South Yorkshire DN4 8DG (GB)
(72) Inventor: Mohanraj, Jagannathan, LS10 4TD West Yorkshire (GB); Walton, John Mawson, DN5 7LP South Yorkshire (GB)
(74) Representative: Cawley, Aimee Elizabeth

(56) References cited:
- WO-A1-2005/024247
- GB-A- 1 226 635
- JP-A- H09 295 337
- JP-A- 2001 311 111

## Description

### FIELD OF THE INVENTION

This invention relates to anti-vibration sheathing for cables such as deep water mooring lines, mast stays and bridge cables.

### BACKGROUND OF THE INVENTION

It is a known problem that when a smooth elongate cylindrical body is disposed at a right angle or an acute angle to a fluid flow, then there is a tendency for self-excited vibrations to arise due to vortex shedding. This phenomenon is known as "vortex induced vibration" (VIV) and is a particular problem that affects deep water mooring cables used for example with drilling platforms, and can also be a problem with supporting cables for bridges and masts. The generation of such vibrations is highly undesirable as they increase dynamic loading and can cause fatigue to the cables and/or connected elements particularly at points of fixity, eg termination chains.

### PRIOR ART

It is known that VIV can be reduced by providing helical fins on the cable. Conventionally this is done by applying to the cable some segmented form of cladding provided with helical fins. Examples of such known methods can be found in CN102121356A, WO2009/109776A, US6896447, WO98/19018A and GB2315797A. It is also known to form a helical strake on the outer surface of a cable jacket/cladding, said jacket/cladding, after its formation, being fitted to a cable - see for example JP2001-311111 in which the helical strake formed is continuous, and WO2005/024247A in which the helical strake is discontinuous. There is no disclosure in either of JP'111 or WO'247 of the jacket/cladding being extruded directly onto the cable. It is furthermore known, e.g. from JPH09-295337, to form a resin coating which includes a continuous helical strake by direct extrusion onto a wire using a rotating die; there is no disclosure of any variation in the continuous helical strake. Such systems are, however, inherently expensive as the cladding has to be applied and secured to the cable which involves a stop start process in the laying of the cable, and when the cladding is formed of metal the cladding can also add significantly to the weight of the cable. There is therefore a need for a more cost-effective solution to the problem. A further problem is that cables provided with such segmented cladding cannot be coiled.

### SUMMARY OF THE INVENTION

According to the invention there is provided a method for forming a cable with an anti-vibration sheathing comprising the step of: forming a sheathing comprising at least one helical strake by extruding a plastics material onto a cable with a rotating die while the cable is drawn through the die, wherein said rotating die comprises at least one groove for forming said at least one helical strake, said method being characterized by the step of either: (a) varying the height or thickness of said helical strake without interrupting extrusion of said sheathing; or (b) interrupting the formation of said helical strake without interrupting extrusion of said sheathing by varying the height or width of said at least one groove in said rotating die, or by closing said at least one groove in said rotating die.

Preferably the rotating die comprises a plurality of equiangularly spaced grooves.

In some embodiments of the invention the method further comprises controlling the pitch of said at least one helical strake by controlling the relative speed of rotation of the rotating die and the speed at which the cable is drawn through the die. For example the rotating die may be rotated at a constant speed while the sheathing is extruded onto said cable, or the rotating die may be rotated at varying speeds while the sheathing is extruded onto said cable.

Preferably the method further comprises applying indicia to said sheathing. The indicia may be provided using a laser marking unit. In such an embodiment the plastics material may be provided with an additive responsive to the operating wavelength of the laser marking unit to enhance the contrast of said markings. The additive when provided may comprise from 1% to 4% of the plastics material by weight.

In embodiments of the invention the combined width of the helical strake(s) comprises between 10% and 90% of the circumference of the cable.

According to another aspect of the present invention there is provided apparatus for forming a cable with an anti-vibration sheathing comprising at least one helical strake, said apparatus including a rotating die through which in use said cable is drawn, said rotating die including at least one groove for forming said at least one helical strake, characterized in that said rotating die further includes (a) a means for varying the width of said at least one groove without interrupting extrusion of said sheathing and/or (b) means for closing said at least one groove without interrupting extrusion of said sheathing.

Preferably the sheathing is formed of a plastics material, more preferably the sheathing is formed of an extruded plastics material.

In some embodiments of the invention the pitch of said at least one helical strake is constant along the length of the cable, alternatively the pitch of said at least one helical strake varies along the length of the cable. The strake may be interrupted at at least one point along the length of the cable. The cable may comprise a plurality of evenly spaced helical strakes.

Preferably the combined width of said helical strake(s) comprise between 10% and 90% of the circumference of the cable.

### BRIEF DESCRIPTION OF THE DRAWINGS

Some embodiments of the invention will now be described by way of example and with reference to the accompanying drawings, in which:-
Figure 1 is a (a) perspective view and (b) cross-sectional view of a cable according to an embodiment of the invention,
Figure 2 shows schematically an extrusion line for performing an embodiment of the invention,
Figure 3 shows an example of a rotating die in cross-section,
Figure 4 shows an example of an extrusion head in the process of forming a cable with integral helical sheathing,
Figure 5 is a (a) perspective view and (b) cross-sectional view of a cable according to a further embodiment of the invention, and
Figure 6 is a (a) front view and (b) perspective view of an extrusion head according to an embodiment of the invention.

### DETAILED DESCRIPTION OF PREFERRED EXAMPLES

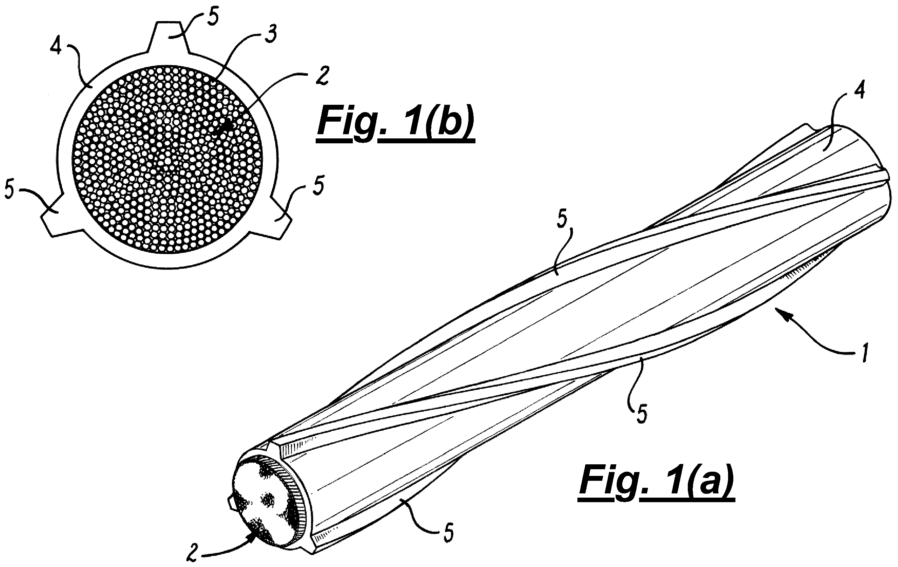

Referring firstly to Figures 1 (a) and 1(b) there is shown a cable 1 according to an embodiment of the invention. The cable 1 may be for use in an application such as a deep water mooring line for use with, for example, an offshore drilling platform or rig. The cable 1 will typically comprise a steel core 2 which itself will be made up of a plurality of helical steel wires or strands 3 as is well-known in the art. The steel core can be of any suitable known form and may, for example, have a typical diameter of around 60mm but the characteristics of the steel core 2, such as the choice of materials, dimensions and strength, may be selected as desired depending on the nature of the intended use of the cable 1. It should also be noted, however, that the use of steel wires or strands is not essential and embodiments of the invention could use synthetic or hybrid materials.

As can be seen from Figures 1(a) and 1(b) the steel core 2 is provided with an extruded plastics sheathing 4 which is integrally formed (by a method to be described further below) with helical strakes 5 that extend along the length of the cable 1. The extruded plastics sheathing may be formed of any suitable material using the method to be described below but may, for example, be medium density polyethylene (MDPE). Other possible materials for the extruded sheathing include for example a wide range of thermoplastic materials such as high density polyethylene, polyurethane, polybutylene, polypropylene, polyesters, PVC, thermoplastic elastomers and others, as well as cross-linked thermoplastic materials.

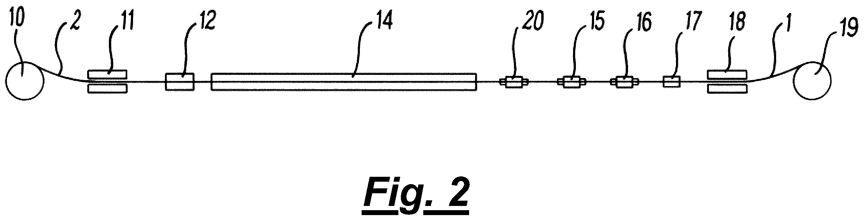

Figure 2 shows schematically a method for manufacturing a sheathed cable according to an embodiment of the invention using a rotating extruder die. It should be noted that in Figure 2 the sequence of steps goes from left to right. A steel core 2 is supplied wound around a reel in pay-off stand 10 and the steel core 2 is taken from the pay-off stand 10 under tension using a first caterpillar 11. The steel core 2 then passes through an extruder head 12 featuring a rotating die which will be described in more detail below and which provides the steel core with an extruded sheathing to form the cable 1, and then is passed through a series of temperature controlled cooling baths 14, an X-ray unit 15 and spark tester 16 for quality control and inspection purposes, length measuring wheel 17 and the finished cable 1 is then taken up via front caterpillar 18 to a further reel in take-up stand 19. The line tension between the two caterpillar drives can be controlled by varying their linear speed and the front take-up stand controls the tension at which the finished product is coiled. Also provided in the system of Figure 2 is a laser marking unit 20 provided between the cooling bath 14 and the X-ray unit 15 the purpose of which will be described in more detail below.

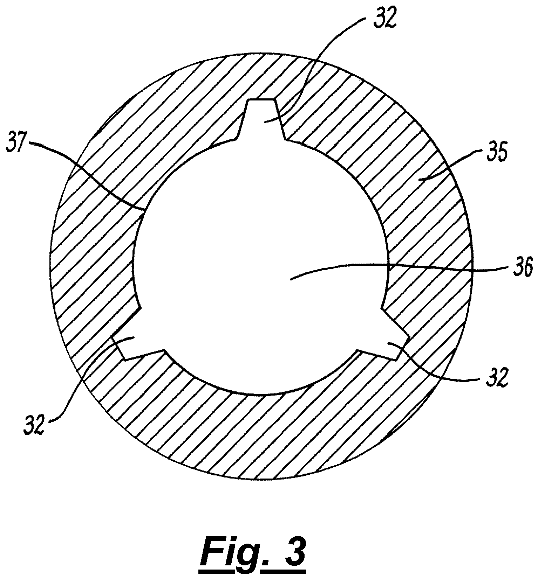

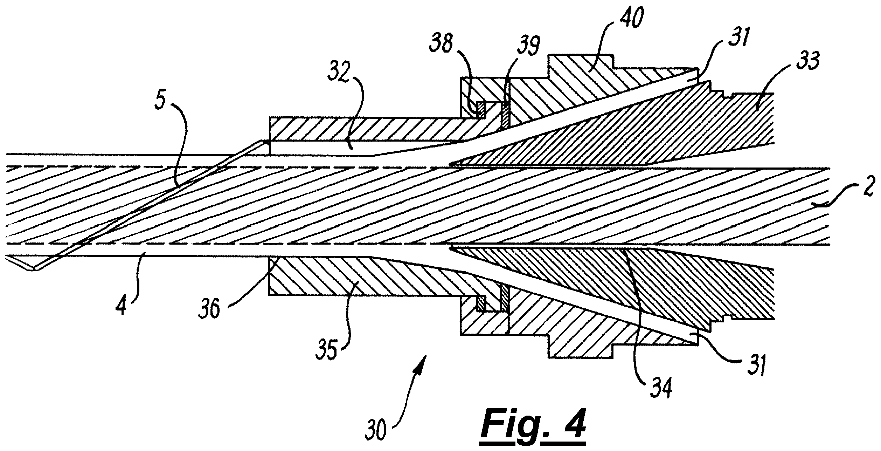

Figures 3 and 4 show an example of a die assembly 30 which fits within the extruder head 12 and is designed to form the sheathing with the integral strakes 5. The die 30 includes supply conduits thorough which the plastics melt 31 is supplied. The die assembly 30 includes a first fixed inner die member 33 having an axial bore 34 through which the steel core (strand or rope) 2 is drawn (in the direction of from right to left as viewed in the figures). The die assembly 30 includes a second rotatable die member 35 also formed with a coaxial bore 36 that is larger in diameter than bore 34 and which includes an annular land 37 (approximately equal in length to its diameter) formed on the inner surface of die member 35. Thrust washers 38,39 are provided between the first and second die members to enable relative rotation between the rotating die member 35 and a fixed outer die member 40.

The land 37 of second die member 35 is provided with at least one (and in this example three) appropriately shaped grooves 32 (best seen in Figure 3). The number of grooves 32 will correspond to the number of helical strakes 5 formed on the cable 1. Where more than one groove 32 is provided, the grooves are preferably equiangularly spaced around the die 30 so that the resulting multiple helical strakes 5 are evenly spaced from each other. It will also be understood that the width of the grooves 32 may be varied to suit an intended application by changing the internal die profile. For example very wide grooves will result in wide strakes such that the strakes occupy the majority of the circumference of the cable, while very narrow grooves will form narrow strakes. Typically for example, the width of the grooves combined may comprise between 10% and 90% of the internal circumference of the die.

The operation of the die assembly 30 is best understood with reference to Figure 4. While the steel core 2 is drawn through the extruder head, melt 31 is supplied to the die assembly 30 under pressure, the second die member 35 is rotated such that the steel core 2 is provided with a plastics sheathing 4. The internal profile of the die is designed to achieve the desired size and shape of the sheathing. The critical parameters here are the length of the die land 37 and the radial gap that exists between the surface of the steel core 2 and the land 37 which generates pressure in the melt as it is supplied into this gap causing the melt to conform closely to the surface of the steel core. The grooves integrally form helical strakes 5 on the sheathing. The shape of the strakes in cross-section is defined by the shape of the grooves 32 and may, for example, be square, triangular or trapezoidal. The width of the strakes is also a possible design variable depending on the fluid flow characteristics, and in the extreme could result in a sheathing that would be better described as having helical grooves rather than strakes.

The pitch of the helical strakes 5 is defined by the speed of rotation of the second die member 35 relative to the speed at which the steel core 2 is drawn through the extruder head 12 and can be selected as desired. Assuming that the speed at which the steel core 2 is drawn through the extruder head is constant, a faster rotation of the second die member 35 will cause a shorter pitch and a slower rotation will cause a longer pitch. Pitch variation may also be provided, however, by keeping rotation of the second die member 35 constant and varying the speed at which the steel core 2 is drawn through the die, or a combination of the two speeds. The pitch may be constant along the length of the cable or - for example if it is known that the angle the cable will make to the fluid flow will vary along its length - the pitch could be varied. The ability to easily control and vary the pitch of the helical strakes is one of the advantages of embodiments of the present invention.

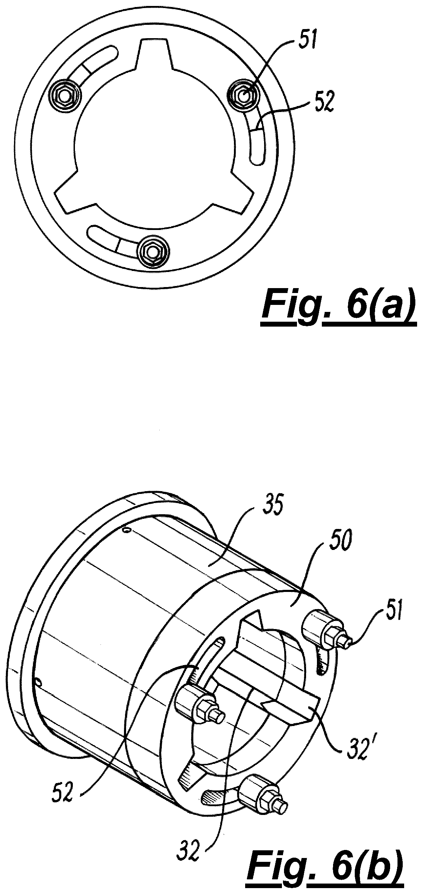

In some embodiments it may also be useful to interrupt the formation of the helical strakes 5 without stopping the sheathing process. Figures 6(a) and (b) illustrate a die structure that allows this to be done. In this embodiment the die includes an additional rotating die member 50 that is fitted to the end of the second die member 35. Rotating die member 50 may be fitted to second die member 35 by bolts 51 that extend through arcuate openings 52 formed in the additional die member 50 and into the second die member 35. The additional rotating die member 50 may be rotated relative to the second die member 35 by an extent delimited by the arcuate openings. Additional rotating die member 50 is formed with grooves 32' identical in number, shape and size to the grooves 32 in the second die member 35. In normal operation the second die member 35 and the additional rotating die member 50 will be positioned so that their respective grooves 32,32' are aligned. This position will correspond to one extreme of the positions allowed by the arcuate openings 51. As the additional die member 50 is rotated towards the other extreme position the grooves 32,32' move out of alignment and the width of the strakes thus formed will be reduced. When the grooves 32,32' are completely out of alignment the groove is closed and the formation of the strake is interrupted though extrusion of the sleeve will continue. Formation of the strakes may be restarted by moving the parts so that the grooves 32,32' are once more back in alignment.

It will also be understood that a restriction mechanism similar to a camera shutter mechanism that can be used to partially restrict the opening of the grooves 32,32' in order to enable the height or thickness of the strakes to be adjusted.

In many cases it is also important to provide the cable with permanent markings or indicia along its length for various purposes, such as for example a longitudinal stripe of contrasting colour for cable installation purposes. For example, it is useful to have markings to assist in making length measurements and to provide means to enable any twisting of the cable to be easily observed. Conventionally this might be done as part of a co-extrusion process by using a secondary extruder to feed a second contrasting colour of melt into the main sheathing die. However, this is difficult to achieve when using a rotating die without disturbing the alignment of the stripe. In an embodiment of the invention the marks may instead be made using a laser marking unit 20 shown in Figure 2. Ink-jet printing may also be applied but is less preferred as it does not provide a permanent marking.

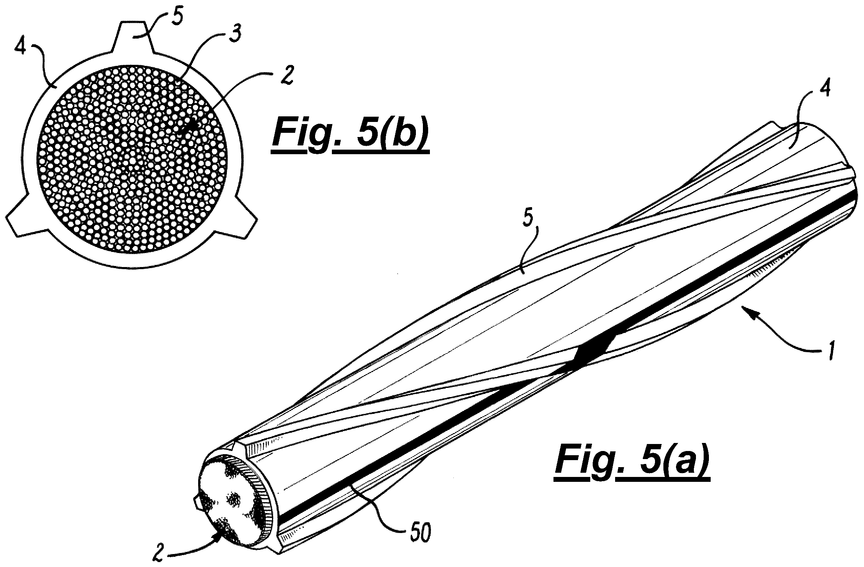

Laser marking works by changing the colour of the plastics following exposure to a laser source. For example, generally yellow plastics sheathing may be changed to black. The laser beam may be continuous to provide a continuous line, or may be pulsed to provide a broken line. Transverse movement of the laser marking unit relative to the length of the cable may provide transverse marks. However, not all plastics materials will change colour so decisively when subject to laser radiation and so it may be preferable to include in the plastics material an additive which is chosen so that it will respond to the wavelength of the laser source being used. For example, MDPE ordinarily does not present a marked colour change when subject to radiation either from a Nd:YAG (fibre source) or a CO₂ laser and so a yellow colour masterbatch with a laser additive.may be used at between 1% and 4% of the plastics material by weight. Figure 5(a) shows a perspective view of a cable 1 provided with a dark line 50 extending along the length of the cable 1. It will be appreciated that the markings could take any convenient form. For example, instead of a continuous line the line may be broken, or the marking may take the form of a bar code, or writing in the form of alphanumeric characters.

It will thus be seen that, at least in preferred forms, the present invention provides a convenient and cost-effective method of applying anti-vibration helical strakes onto a cable by integrally forming them as part of an extrusion process. Furthermore, the sheathing can also be provided with any required marks (previously provided by co-extruding a contrasting colour) using a laser marking technique.

## Claims

1. A method for forming a cable (1) with an anti-vibration sheathing (4) comprising the step of:
forming a sheathing (4) comprising at least one helical strake (5) by extruding a plastics material onto a cable (2) with a rotating die (35, 50) while the cable (2) is drawn through the die, wherein said rotating die (35, 50) comprises at least one groove (32, 32') for forming said at least one helical strake (5),
said method being **characterized by** the step of either:
(a) varying the height or thickness of said helical strake (5) without interrupting extrusion of said sheathing (4); or
(b) interrupting the formation of said helical strake (5) without interrupting extrusion of said sheathing (4) by varying the height or width of said at least one groove (32, 32') in said rotating die (35, 50), or by closing said at least one groove (32, 32') in said rotating die (35, 50).

2. A method as claimed in claim 1 wherein said rotating die (35, 50) comprises a plurality of equiangularly spaced grooves (32, 32').

3. A method as claimed in claim 1 or claim 2 further comprising controlling the pitch of said at least one helical strake (5) by controlling the relative speed of rotation of the rotating die (35, 50) and the speed at which the cable (2) is drawn through the die.

4. A method as claimed in any preceding claim further comprising applying indicia to said sheathing (4).

5. A method as claimed in claim 4 wherein said indicia are provided using a laser marking unit.

6. A method as claimed in claim 5 wherein the plastics material is provided with an additive responsive to the operating wavelength of the laser marking unit to enhance the contrast of said markings.

7. A method as claimed in claim 6 wherein said additive comprises from 1% to 4% of the plastics material by weight.

8. Apparatus for forming a cable (1) with an anti-vibration sheathing (4) comprising at least one helical strake (5), said apparatus including a rotating die (35, 50) through which in use said cable is drawn, said rotating die (35, 50) including at least one groove (32, 32') for forming said at least one helical strake (5), **characterized in that** said rotating die (35, 50) further includes (a) means for varying the width of said at least one groove (32, 32') without interrupting extrusion of said sheathing (4) and/or (b) means for closing said at least one groove (32, 32') without interrupting extrusion of said sheathing (4).

9. Apparatus as claimed in claim 8 wherein the means for varying the width of said at least one groove (32, 32') without interrupting extrusion of the sheathing (4) is an additional rotating die member (50), which is rotatably fitted to an end of the rotating die (35).

10. Apparatus as claimed in claim 9 wherein the additional rotating die member (50) is rotatably fitted to the end of the rotating die (35) by bolts (51) that extend through arcuate openings (52) formed in the additional die member (50) and into the rotating die (35), said arcuate openings (52) limiting the extent to which the additional rotating die member (5) is rotatable relative to the rotating die (35).

11. Apparatus as claimed in claim 9 or claim 10 wherein the grooves (32') in the additional rotating die member (50) are identical in number, shape and size to the grooves (32) in the rotating die (35).

12. Apparatus as claimed in any of claims 9 to 11 wherein the grooves (32, 32') in each of the rotating die (35) and additional rotating die member (50) are equiangularly spaced.

13. Apparatus as claimed in any of claims 8 to 12 further comprising a camera shutter-type mechanism adapted to partially restrict the opening of the grooves (32,32') so as to adjust the height of said at least one helical strake (5).

## Patentansprüche

1. Verfahren zum Formen eines Kabels (1) mit einem Antivibrationsmantel (4) umfassend den Schritt:
Formen eines Mantels (4), umfassend zumindest einen wendelförmigen Ansatzteil (5), durch Extrudieren eines Kunststoffmaterials auf einem Kabel (2) mit einer rotierenden Matrize (35, 50), während das Kabel (2) durch die Matrize gezogen wird, wobei die rotierende Matrize (35, 50) zumindest eine Nut (32, 32') zum Formen des zumindest einen Ansatzteils (5) umfasst,
wobei das Verfahren **gekennzeichnet ist durch** den Schritt:
(a) Verändern der Höhe oder der Dicke des wendelförmigen Ansatzteils (5) ohne die Extrusion des Mantels (4) zu unterbrechen; oder
(b) Unterbrechen des Formens des wendelförmigen Ansatzteils (5) ohne die Extrusion des Mantels (4) zu unterbrechen, **durch** Verändern der Höhe oder Dicke der zumindest einen Nut (32, 32') in der rotierenden Matrize (35, 50), oder **durch** Schließen der zumindest einen Nut (32, 32') in der rotierenden Matrize (35, 50).

2. Verfahren nach Anspruch 1, wobei die rotierende Matrize (35, 50) eine Mehrzahl von gleichwinklig voneinander beabstandeten Nuten (32, 32') umfasst.

3. Verfahren nach Anspruch 1 oder 2, ferner umfassend das Einstellen der Steigung des zumindest einen Ansatzteils (5) durch Einstellen der relativen Drehgeschwindigkeit der rotierenden Matrize (35, 50) und der Geschwindigkeit, mit der das Kabel (2) durch die Matrize gezogen wird.

4. Verfahren nach einem vorhergehenden Anspruch, ferner umfassend das Aufbringen von Zeichen auf den Mantel (4).

5. Verfahren nach Anspruch 4, wobei die Zeichen mittels einer Lasermarkierungseinheit aufgebracht sind.

6. Verfahren nach Anspruch 5, wobei das Kunststoff mit einem Zusatzstoff versehen ist, welches auf die Betriebswellenlänge der Lasermarkierungseinheit reagiert, um den Kontrast der Zeichen zu verbessern.

7. Verfahren nach Anspruch 6, wobei das Zusatzstoff von 1 bis 4 Gew.-% des Kunststoffmaterials umfasst.

8. Gerät zum Formen eines Kabels (1) mit einem Antivibrationsmantel (4), welcher zumindest einen wendelförmigen Ansatzteil (5) umfasst, wobei das Gerät eine rotierende Matrize (35, 50) umfasst, durch welche, im Betrieb, das Kabel gezogen wird, wobei die rotierende Matrize (35, 50) zumindest eine Nut (32, 32') zum Formen des zumindest einen wendelförmigen Ansatzteils (5) umfasst, **dadurch gekennzeichnet, dass** die rotierende Matrize (35, 50) ferner umfasst (a) Mittel zum Ändern der Breite der zumindest einen Nut (32, 32') ohne die Extrusion des Mantels (4) zu unterbrechen und/oder (b) Mittel zum Schließen der zumindest einen Nut (32, 32') ohne die Extrusion des Mantels (4) zu unterbrechen.

9. Gerät nach Anspruch 8, wobei die Mittel zum Ändern der Breite der zumindest einen Nut (32, 32') ohne die Extrusion des Mantels (4) zu unterbrechen ein zusätzliches rotierendes Matrizenglied (50) ist, welches an einem Ende der rotierenden Matrize (35) drehbar befestigt ist.

10. Gerät nach Anspruch 9, wobei das zusätzliche rotierende Matrizenglied (50) an einem Ende der rotierenden Matrize (35) durch Bolzen (51) drehbar befestigt ist, welche sich durch bogenförmige Öffnungen (52), welche im zusätzlichen Matrizenglied (50) geformt sind und in die rotierende Matrize erstrecken, wobei die bogenförmige Öffnungen (52) das Ausmaß begrenzen, in welchem das zusätzliche rotierende Matrizenglied (5) relativ zur rotierenden Matrize (35) drehbar ist.

11. Gerät nach Anspruch 9 oder Anspruch 10, wobei die Nuten (32') im zusätzlichen rotierenden Matrizenglied (50) in der selben Anzahl, Form und Abmessungen der Nuten (32) in der rotierenden Matrize (35) vorgesehen sind.

12. Gerät nach einem der Ansprüche 9 bis 11, wobei die Nuten (32, 32') in der rotierenden Matrize (35) und im zusätzlichen rotierenden Matrizenglied (50) gleichwinklig voneinander beabstandet sind.

13. Gerät nach einem der Ansprüche 8 bis 12, ferner umfassend einen Mechanismus des Typs eines Kameraverschlusses, welcher zur teilweisen Begrenzung der Öffnung der Nuten (32, 32') ausgebildet ist, um die Höhe des zumindest einen wendelförmigen Ansatzteils (5) einzustellen.

## Revendications

1. Procédé de formation d'un câble (1) avec une couche extérieure antivibratile (4) comprenant les étapes :
de formation d'une couche extérieure (4) comprenant au moins une virure hélicoïdale (5) en extrudant une matière plastique sur un câble (2) avec une filière rotative (35, 50), tandis que le câble (2) est tiré à travers la filière, dans laquelle ladite filière rotative (35, 50) comprend au moins une rainure (32, 32') pour former ladite au moins une virure hélicoïdale (5), ledit procédé étant **caractérisé par** l'une des étapes :
de variation de la hauteur ou de l'épaisseur de ladite virure hélicoïdale (5) sans interruption d'extrusion de ladite couche extérieure (4) ; ou
d'interruption de la formation de ladite virure hélicoïdale (5) sans interruption d'extrusion de ladite couche extérieure (4) en variant la hauteur ou de la largeur de ladite au moins une rainure (32, 32') dans ladite filière rotative (35, 50), ou en fermant ladite au moins une rainure (32, 32') dans ladite filière rotative (35, 50).

2. Procédé selon la revendication 1, dans lequel ladite filière rotative (35, 50) comprend une pluralité de rainures espacées de manière équiangulaire (32, 32').

3. Procédé selon la revendication 1 ou 2 comprenant en outre le contrôle du pas de l'au moins une virure hélicoïdale (5) en contrôlant la vitesse de rotation relative de la filière rotative (35, 50) et la vitesse à laquelle le câble (2) est tiré à travers la filière.

4. Procédé selon l'une quelconque des revendications précédentes, comprenant en outre l'application de marques sur ladite couche extérieure (4).

5. Procédé selon la revendication 4, dans lequel lesdites marques sont fournies à l'aide d'une unité de marquage laser.

6. Procédé selon la revendication 5, dans lequel la matière plastique est fournie avec un additif réagissant à la longueur d'onde de fonctionnement de l'unité de marquage laser pour améliorer le contraste desdits marquages.

7. Procédé selon la revendication 6, dans lequel ledit additif comprend entre 1 % et 4 % en poids de la matière plastique.

8. Dispositif de formation d'un câble (1) avec une couche extérieure antivibratile (4), comprenant au moins une virure hélicoïdale (5), ledit dispositif comprenant une filière rotative (35, 50) à travers laquelle le câble est tiré en fonctionnement, ladite filière rotative (35, 50) comprenant au moins une rainure (32, 32') pour former au moins une virure hélicoïdale (5), **caractérisée en ce que** ladite filière rotative (35, 50) comprend en outre (a) des moyens de variation de la largeur de ladite au moins une rainure (32, 32') sans interruption d'extrusion de ladite couche extérieure (4) et/ou (b) des moyens de fermeture de l'au moins une rainure (32, 32') sans interruption d'extrusion de ladite couche extérieure (4).

9. Dispositif selon la revendication 8, dans lequel les moyens de variation de la largeur de ladite au moins une rainure (32, 32') sans interruption d'extrusion de la couche extérieure (4) est un membre de filière rotatif additionnel (50), qui est adapté de façon rotative à une extrémité de la filière rotative (35).

10. Dispositif selon la revendication 9, dans lequel le membre de filière rotatif additionnel (50) est adapté de manière rotative à l'extrémité de la filière rotative (35) par des boulons (51) qui s'étendent à travers des ouvertures arciformes (52) formées dans le membre de filière rotatif additionnel (50) et dans la filière rotative (35), lesdites ouvertures arciformes (52) limitant la mesure dans laquelle le membre de filière rotatif additionnel (5) est rotatif par rapport à la filière rotative (35).

11. Dispositif selon la revendication 9 ou 10, dans lequel les rainures (32') dans le membre de filière rotatif additionnel (50) sont identiques en nombre, en forme et en taille aux rainures (32) dans la filière rotative (35).

12. Dispositif selon l'une quelconque des revendications 9 à 11, dans lequel les rainures (32, 32') dans la filière rotative (35) et le membre de filière rotatif additionnel (50) sont espacées de manière équiangulaire.

13. Dispositif selon l'une quelconque des revendications 8 à 12, comprenant en outre un mécanisme de type obturateur de caméra, adapté pour restreindre partiellement l'ouverture des rainures (32,32') de manière à ajuster la hauteur de ladite au moins une virure hélicoïdale (5).
